(19) Europäisches Patentamt
European Patent Office
Office européen des brevets

(11) **EP 1 946 059 B1**

(12) **FASCICULE DE BREVET EUROPEEN**

(45) Date de publication et mention de la délivrance du brevet:
**07.07.2010 Bulletin 2010/27**

(51) Int Cl.:
***G01L 5/00*** *(2006.01)*

(21) Numéro de dépôt: **06831078.8**

(86) Numéro de dépôt international:
**PCT/FR2006/002476**

(22) Date de dépôt: **07.11.2006**

(87) Numéro de publication internationale:
**WO 2007/054639 (18.05.2007 Gazette 2007/20)**

(54) **ROULEMENT CAPTEUR DE DEFORMATIONS COMPRENANT AU MOINS TROIS JAUGES DE CONTRAINTE**

DEFORMATIONSMESSLAGER MIT MINDESTENS DREI DEHNUNGSMESSSENSOREN

DEFORMATION-SENSOR BEARING COMPRISING AT LEAST THREE STRAIN GAUGES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.11.2005 FR 0553407**

(43) Date de publication de la demande:
**23.07.2008 Bulletin 2008/30**

(73) Titulaire: **S.N.R. ROULEMENTS**
**74000 Annecy (FR)**

(72) Inventeurs:
• **DURET, Christophe**
**F-74600 Quintal (FR)**
• **BLANCHIN, Olivier**
**F-74000 Annecy (FR)**
• **LAVOYE, Julien**
**F-38130 Echirolles (FR)**

(74) Mandataire: **Novagraaf Technologies**
**122 rue Edouard Vaillant**
**92593 Levallois-Perret Cedex (FR)**

(56) Documents cités:
**EP-A- 1 221 589      DE-A1- 10 041 093**
**US-A- 4 203 319      US-A- 4 705 969**
**US-A1- 2002 194 927**

**EP 1 946 059 B1**

**Description**

L'invention concerne un roulement comprenant une bague fixe, une bague tournante et au moins une rangée de corps roulants disposés dans un chemin de roulement qui est formé entre lesdites bagues de sorte à permettre leur rotation relative.

Elle s'applique typiquement à des roulements de roue de véhicule automobile, la bague fixe étant solidaire du châssis dudit véhicule et la roue étant associée à la bague tournante.

Lorsque l'on souhaite connaître les efforts qui s'appliquent à l'interface entre la roue et la chaussée sur laquelle ladite roue tourne, il est connu de mesurer lesdits efforts au niveau du pneu ou au niveau du châssis. Toutefois, la mesure au niveau du pneu pose des problèmes importants de transmission du signal entre le référentiel tournant du pneu et un référentiel fixe de calcul, ledit référentiel tournant devant, en outre, être positionné en permanence par rapport audit référentiel fixe de sorte à pouvoir réaliser les calculs. Concernant la mesure au niveau du châssis, elle est rendue difficile par la répartition des efforts entre les différents organes qui relient la roue audit châssis.

Par conséquent, comme proposé dans les documents FR-2 839 553 et FR-2 812 356, la bague fixe, qui est le premier organe de liaison entre la roue et le châssis, est notamment utilisée en tant que support pour la détermination des efforts qui s'exercent à l'interface entre la roue et la chaussée lors des déplacements du véhicule.

EP 1 221 589 A2 divulgue un roulement à capteur d'informations pour détecter des grandeurs physiques.

En particulier, la détermination des efforts peut être réalisée par mesure des déformations de la bague fixe qui sont induites par le passage des corps roulants. En effet, l'amplitude de ces déformations est représentative des efforts à déterminer.

L'un des problèmes qui se pose avec une telle stratégie de détermination des efforts est que le signal de déformation dépend de la vitesse de rotation. En particulier, la qualité de la mesure à faible vitesse est insuffisante et la détermination n'est disponible qu'après mesure des déformations induites par le passage d'au moins deux corps roulants successifs.

Par conséquent, ce problème est d'autant plus critique que la mesure d'efforts doit être réalisée en temps réel ou avec un minimum de retard, tel que cela est nécessaire pour les systèmes de contrôle de la dynamique du véhicule comme par exemple l'ABS ou l'ESP.

L'invention vise notamment à remédier à ce problème en proposant un roulement comprenant un système de détermination de l'amplitude des déformations de la bague fixe, ledit système étant agencé pour réaliser une interpolation spatiale du signal de déformation de sorte à avoir, à tout instant et indépendamment de la vitesse de rotation, une mesure des déformations et donc permettre la détermination des efforts.

A cet effet, selon une première réalisation, l'invention propose un roulement comprenant une bague fixe, une bague tournante et au moins une rangée de corps roulants disposés dans un chemin de roulement qui est formé entre lesdites bagues de sorte à permettre leur rotation relative, lesdits corps roulants étant équirépartis dans le chemin de roulement avec un écart angulaire λ, ledit roulement comprenant au moins un système de détermination de l'amplitude A des déformations pseudo sinusoïdales d'une zone de la bague fixe qui sont induites lors de la rotation, dans lequel le système de détermination comprend :

- trois jauges de contrainte, délivrant chacune un signal fonction de la déformation subie par ladite jauge, lesdites jauges étant équiréparties sur ladite zone avec un espacement égal à λ/4 ;
- un dispositif de mesure de trois signaux $V_i$ qui sont fonction respectivement des variations temporelles du signal émis par chaque jauge lors de la rotation, ledit dispositif étant apte à former, par combinaison des trois signaux $V_i$, deux signaux respectivement SIN et COS de même angle et de même amplitude, ladite amplitude étant fonction de A ;
- un dispositif de calcul de l'amplitude A des déformations de la zone en fonction du temps, ledit dispositif étant agencé pour calculer l'expression $SIN^2 + COS^2$ de sorte à en déduire l'amplitude A.

En particulier, les jauges sont à base d'éléments résistifs de sorte à présenter chacune une résistance électrique $R_i$ qui varie en fonction des déformations subies par ladite jauge et le dispositif de mesure comprend un montage en boucle de courant entre les trois jauges, ledit montage comprenant un premier étage de trois amplificateurs différentiels à gain réglable $G_i$.

En outre, l'analyse fréquentielle du signal produit par une jauge de contrainte disposée sur une zone de déformation d'un roulement lors de la rotation montre la présence de différents signaux parasites. En particulier, le signal induit par le passage des billes est perturbé à des fréquences correspondant à la présence de défauts de rotation. Ainsi, on peut identifier un signal de fréquence double de celle de la rotation qui correspond à un défaut d'ovalisation de la bague tournante, et un signal de même fréquence que celle de la rotation qui correspond à un défaut d'excentration de la bague tournante.

Selon un aspect complémentaire, l'invention vise à s'affranchir de la présence de tels signaux parasites de sorte à améliorer la qualité du signal de mesure de l'amplitude des déformations pseudo sinusoïdales d'une zone de la

2

bague fixe d'un roulement qui sont induites lors de la rotation.

A cet effet, selon une deuxième réalisation complémentaire de la première, l'invention propose un roulement qui comprend une quatrième jauge de contrainte délivrant un signal fonction de la déformation subie par ladite jauge, ladite jauge étant espacée d'une distance égale à λ/4 de l'une des trois autres jauges, le montage en boucle de courant comprenant ladite quatrième jauge et un quatrième amplificateur différentiel à gain réglable $G_i$ dans le premier étage pour délivrer quatre signaux $V_i$ qui sont fonction respectivement des variations temporelles du signal émis par chaque jauge lors de la rotation, dans lequel le dispositif de mesure comprend en outre un deuxième étage d'amplificateurs différentiels comprenant trois amplificateurs différentiels qui sont montés pour faire les différences $V_1 - V_2$, $V_2 - V_3$ et $V_4 - V_3$, au moins un troisième étage d'amplificateurs différentiels étant prévu pour délivrer les signaux SIN et COS par combinaison des trois signaux issus du deuxième étage.

Selon une troisième réalisation complémentaire de la deuxième, l'invention propose un roulement qui comprend une cinquième jauge de contrainte délivrant un signal fonction de la déformation subie par ladite jauge, ladite jauge étant espacée d'une distance égale à λ/4 de l'une des quatre autres jauges, le montage en boucle de courant comprenant ladite cinquième jauge et un cinquième amplificateur différentiel à gain réglable $G_i$ dans le premier étage pour délivrer cinq signaux $V_i$ qui sont fonction respectivement des variations temporelles du signal émis par chaque jauge lors de la rotation, dans lequel le dispositif de mesure comprend en outre un deuxième étage d'amplificateurs différentiels comprenant quatre amplificateurs différentiels qui sont montés pour faire les différences $V_1 - V_2$, $V_2 - V_3$, $V_4 - V_3$ et $V_5 - V_4$, au moins un troisième étage d'amplificateurs différentiels étant prévu pour délivrer les signaux SIN et COS par combinaison des quatre signaux issus du deuxième étage.

Dans ces deux dernières réalisations, le dispositif de mesure peut comprendre un troisième et un quatrième étages d'amplificateurs différentiels, le troisième étage combinant les signaux issus du deuxième étage et le quatrième étage combinant des signaux issus des deuxième et/ou troisième étages de sorte à délivrer les signaux SIN et COS.

Selon une quatrième réalisation complémentaire de la deuxième, l'invention propose un roulement qui comprend trois jauges de contrainte supplémentaires délivrant un signal fonction de la déformation subie par ladite jauge, lesdites jauges supplémentaires étant intercalées entre les quatre autres jauges de sorte à former un ensemble de sept jauges équiréparties sur la zone avec un espacement égal à λ/8, le montage en boucle de courant comprenant ledit ensemble de jauges et sept amplificateurs différentiels à gain réglable $G_i$ dans le premier étage pour délivrer sept signaux $V_i$ qui sont fonction respectivement des variations temporelles du signal émis par chaque jauge lors de la rotation, dans lequel le dispositif de mesure comprend en outre un deuxième étage d'amplificateurs différentiels comprenant six amplificateurs différentiels (8) qui sont montés pour faire les différences $V_1 - V_2$, $V_2 - V_3$, $V_3 - V_4$, $V_4 - V_5$, $V_5 - V_6$ et $V_6 - V_7$, au moins un troisième étage d'amplificateurs différentiels étant prévu pour délivrer les signaux SIN et COS par combinaison des six signaux issus du deuxième étage.

Dans cette réalisation, le dispositif de mesure peut comprendre un troisième, un quatrième et un cinquième étages d'amplificateurs différentiels, le troisième étage combinant les signaux issus du deuxième étage, le quatrième étage combinant des signaux issus des deuxième et troisième étages et le cinquième étage combinant des signaux issus du quatrième étage de sorte à délivrer les signaux SIN et COS.

D'autres objets et avantages de l'invention apparaîtront au cours de la description qui suit, faite en référence aux dessins annexés, dans lesquels :

- la figure 1 est une vue en perspective d'un mode de réalisation d'un roulement montrant les jauges de quatre systèmes de détermination de l'amplitude des déformations pseudo sinusoïdales, lesdites jauges étant respectivement disposées sur une zone de la bague fixe ;

- la figure 2 est une représentation fonctionnelle d'un premier mode de réalisation d'un système de détermination selon l'invention ;

- la figure 3 est une représentation fonctionnelle partielle d'un deuxième mode de réalisation d'un système de détermination selon l'invention ;

- la figure 4 est une représentation fonctionnelle d'un troisième mode de réalisation d'un système de détermination selon l'invention ;

- la figure 5 est une représentation fonctionnelle partielle d'un quatrième mode de réalisation d'un système de détermination selon l'invention.

L'invention concerne un roulement comprenant une bague fixe 1, une bague tournante 2 et au moins une rangée de corps roulants disposés dans un chemin de roulement qui est formé entre lesdites bagues de sorte à permettre la rotation relative desdites bagues.

La bague fixe 1 est destinée à être associée à une structure fixe et la bague tournante est destinée à être associée à un organe tournant. Dans une application particulière, le roulement est un roulement de roue de véhicule automobile, la structure fixe étant le châssis dudit véhicule et l'organe tournant étant la roue.

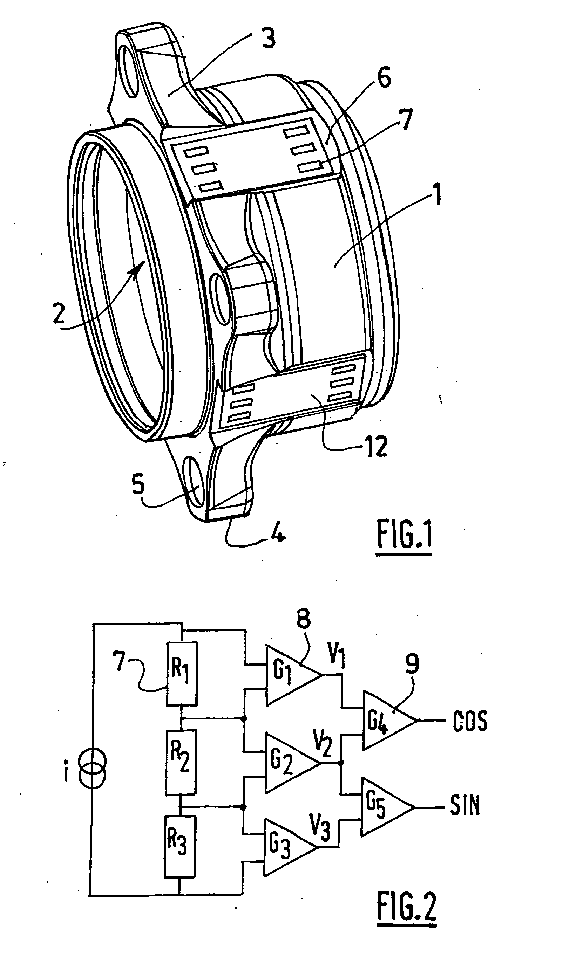

En relation avec la figure 1, on décrit un tel roulement de roue comprenant deux rangées de billes qui sont disposées coaxiale ment dans respectivement un chemin de roulement prévu entre la bague extérieure fixe 1 et la bague intérieure tournante 2. Par ailleurs, la bague fixe 1 est pourvue de moyens de fixation au châssis qui sont formés d'une bride 3 comprenant quatre saillies radiales 4 dans lesquelles un trou axial 5 est réalisé pour permettre la fixation par vissage.

Les billes sont équiréparties dans le chemin de roulement avec un écart angulaire λ qui est également appelé période spatiale. Selon une réalisation connue, l'écart entre les billes est maintenu en disposant celles-ci dans une cage.

L'invention vise à permettre la détermination de l'amplitude des déformations d'au moins une zone 6 de la bague fixe 1, de sorte à pouvoir en déduire les efforts qui s'appliquent à l'interface entre la roue et la chaussée sur laquelle ladite roue tourne.

En effet, le passage des billes dans le chemin de roulement induit une compression et une relaxation de la bague fixe 1. Ainsi, lors de la rotation, la bague fixe 1 est soumise à une déformation périodique qui peut être approximée par une sinusoïde. Dans la suite de la description, on parlera de déformations pseudo sinusoïdales pour désigner les déformations de la bague fixe 1 lors de la rotation.

La déformation pseudo sinusoïdale est caractérisée par une amplitude qui dépend des charges subies par le roulement et donc des efforts qui s'appliquent à l'interface, et une fréquence qui est proportionnelle à la vitesse de rotation de la bague tournante ainsi qu'au nombre de billes.

Bien que la description soit réalisée en relation avec un roulement de roue comprenant deux rangées de billes pour lesquelles on détermine indépendamment l'amplitude des déformations, celle-ci est directement transposable par l'homme du métier à un autre type de roulement et/ou dans une autre application dans laquelle on souhaiterait déterminer l'amplitude des déformations pseudo sinusoïdales d'au moins une zone 6 de la bague fixe 1.

Selon l'invention, le roulement comprend au moins un système de détermination de l'amplitude A des déformations pseudo sinusoïdales d'une zone 6 de la bague fixe 1 qui sont induites lors de la rotation, ledit système comprenant trois jauges de contrainte 7.

Les jauges 7 sont chacune apte à délivrer un signal fonction de la déformation qu'elle subit. Comme représenté sur la figure 1, les jauges 7 sont équiréparties sur la zone 6 selon une ligne qui s'étend dans la direction générale de la rotation.

Le système de détermination comprend en outre un dispositif de mesure de trois signaux $V_i$ qui sont fonction respectivement des variations temporelles du signal émis par chaque jauge 7 lors de la rotation, ledit dispositif étant apte à former, par combinaison des trois signaux $V_i$, deux signaux respectivement SIN et COS de même angle et de même amplitude, ladite amplitude étant fonction de A.

A partir de ces deux signaux SIN et COS, on est capable, par l'intermédiaire d'un dispositif de calcul formé par exemple d'un processeur (non représenté), de déduire l'amplitude A en calculant l'expression $SIN^2 + COS^2$.

Ainsi, le calcul de l'amplitude étant réalisé indépendamment de la vitesse de rotation, on s'affranchit notamment des problèmes de retard ou de qualité qui sont inhérents à une détermination temporelle des déformations.

En relation avec les figures 2 à 5, on décrit quatre modes de réalisation d'un système de détermination selon l'invention, dans lequel les jauges 7 sont à base d'éléments résistifs, notamment piézorésistifs ou magnétostrictifs, de sorte à présenter chacune une résistance électrique $R_i$ qui varie en fonction des déformations subies par ladite jauge 7. En particulier, les jauges 7 peuvent comprendre soit un bloc de plusieurs résistances qui sont combinées pour obtenir une valeur de résistance moyennée qui est représentative de la valeur de la résistance au niveau de la position du bloc, soit une seule résistance.

Selon les modes de réalisation représentés, le dispositif de mesure comprend un montage en boucle de courant entre les jauges 7 et une source de courant i. Le montage comprend un premier étage d'amplificateurs différentiels 8 à gain réglable $G_i$. Par ailleurs, le dispositif de mesure peut comprendre en outre un étage de filtrage des signaux non représenté.

En relation avec la figure 2, le premier mode de réalisation comprend trois jauges 7 montées en série dans la boucle de courant, et le premier étage comprend trois amplificateurs différentiels 8 qui délivrent les signaux :

$$V_1 = G_1 \times (R_{01} + \Delta R_1 \sin(\omega t))i$$

$$V_2 = G_2 \times (R_{02} + \Delta R_2 \sin(\omega t + \varphi))i$$

$$V_3 = G_3 \times (R_{03} + \Delta R_3 \sin(\omega t + 2\varphi))i$$

$R_{0i}$ étant les valeurs au repos des résistances $R_i$, $\Delta R_i$ les variations de résistance des jauges 7, $\omega = 2\pi/T$ (T étant la période temporelle), $\varphi$ le déphasage spatial entre les jauges 7, i l'intensité du courant dans la boucle.

Le caractère sinusoïdal (par rapport au temps) de la fonction échantillonnée est destiné à simplifier les calculs qui suivent, mais n'est pas limitatif. Cette hypothèse revient à supposer que le roulement tourne à vitesse constante ($\omega$ constante).

Selon le mode de réalisation représenté sur la figure 2, le dispositif de mesure comprend en outre un deuxième étage d'amplificateurs différentiels 9 agencés pour faire les différences $V_1 - V_2$ et $V_3 - V_2$. En réglant les gains $G_1$, $G_2$, $G_3$, il est possible d'obtenir l'égalité $G_1\Delta R_1 = G_2\Delta R_2 = G_3\Delta R_3 = G\Delta R$.

Dans le cas particulier où $\varphi = \pi/2$, c'est-à-dire lorsque les jauges 7 sont espacées d'une distance égale à $\lambda/4$, les différences $V_1 - V_2$ et $V_3 - V_2$ s'écrivent :

$$V_1 - V_2 = \left[ -\sqrt{2}G\Delta R \cos(\omega t + \pi/4) \right] \times i$$

$$V_3 - V_2 = \left[ -\sqrt{2}G\Delta R \sin(\omega t + \pi/4) \right] \times i$$

Par conséquent, dans ce premier mode de réalisation, le dispositif de mesure permet d'obtenir directement des signaux COS = $V_1 - V_2$ et SIN = $V_3 - V_2$.

Ainsi, en calculant l'expression SIN$^2$ + COS$^2$ on obtient [$\sqrt{2}G\Delta R$]$^2 \times i^2$, ce qui permet, en sortie du dispositif de calcul, d'obtenir en fonction du temps l'amplitude A qui est fonction de $\Delta R$.

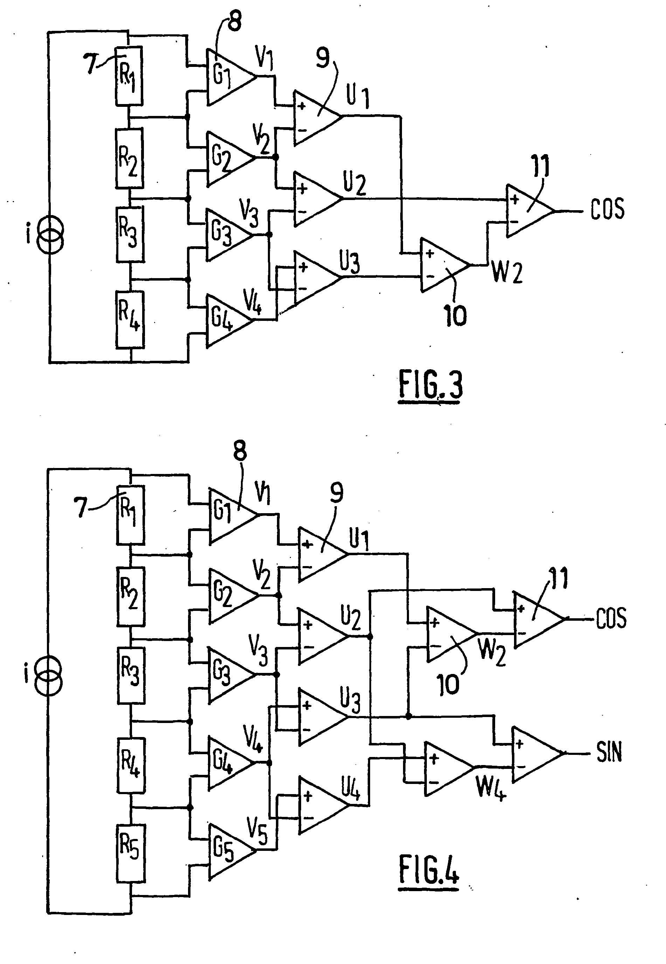

En relation avec les figures 3 à 5, on décrit trois modes de réalisation qui permettent en outre de s'affranchir par filtrage des signaux parasites au signal pseudo sinusoïdal induit par le passage des corps roulants, notamment des signaux présentant une fréquence fonction de la fréquence de rotation tel que le signal d'ovalisation ou celui d'excentration. Ces modes de réalisation proposent un dispositif de mesure qui permet d'obtenir des signaux SIN et COS filtrés de sorte à présenter moins de bruit, ce qui améliore la précision de la détermination de l'amplitude des déformations pseudo sinusoïdales.

Dans ces trois modes de réalisation, la structure générale du roulement, les jauges de contrainte 7 ainsi que leur implantation sur le roulement peuvent être analogues à celles décrites en relation avec le premier mode de réalisation et notamment en référence à la figure 1.

En relation avec la figure 3, le deuxième mode de réalisation comprend quatre jauges de contrainte 7 délivrant chacune un signal fonction de la déformation subie par ladite jauge. Les jauges 7 sont équiréparties sur la zone 6 avec un espacement égal à $\lambda/4$. Le montage en boucle de courant comprend les quatre jauges 7 disposées en série et le premier étage comprend quatre amplificateurs différentiels 8 qui délivrent les signaux :

$$V_1 = G_1\left[ R_{0i} + \Delta R_1 \sin(\omega_1 t) + \beta_1 \sin(\omega_2 t + \varphi) \right]i$$

$$V_2 = G_2\left[ R_{02} + \Delta R_2 \sin(\omega_1 t + \pi/2) + \beta_2 \sin(\omega_2 t + 2\varphi) \right]i$$

$$V_3 = G_3\left[ R_{03} + \Delta R_3 \sin(\omega_1 t + \pi) + \beta_3 \sin(\omega_2 t + 3\varphi) \right]i$$

$$V_4 = G_4\left[ R_{04} + \Delta R_4 \sin(\omega_1 t + 3\pi/2) + \beta_4 \sin(\omega_2 t + 4\varphi) \right]i$$

Dans lesquels, le signal parasite est d'amplitude $\beta_\tau$, de pulsation $\omega_2$ et de phase $\varphi$ par rapport au signal induit par la rotation des billes. En particulier, lorsque le signal parasite est dû à l'ovalisation, le déphasage $\varphi$ peut se définir de la façon suivante dans le cas d'un roulement à 14 billes :

$$\varphi = (\lambda \times 360)/(4 \times 7 \times \lambda) = 12{,}82° = \text{constante}$$

Le dispositif de mesure comprend en outre un deuxième étage comprenant trois amplificateurs différentiels 9 qui permet de supprimer la composante continue par soustraction des signaux $V_i$ en formant les signaux suivants :

$$U_1 = V_1 - V_2 = \left[ -\sqrt{2}G\Delta R\cos(\omega_1 t + \pi/4) - 2\beta\sin(\varphi/2)\cos(\omega_2 t + 3\varphi/2) \right] \times i$$

$$U_2 = V_2 - V_3 = \left[ -\sqrt{2}G\Delta R\cos(\omega_1 t + 3\pi/4) - 2\beta\sin(\varphi/2)\cos(\omega_2 t + 5\varphi/2) \right] \times i$$

$$U_3 = V_4 - V_3 = \left[ -\sqrt{2}G\Delta R\cos(\omega_1 t + \pi/4) + 2\beta\sin(\varphi/2)\cos(\omega_2 t + 7\varphi/2) \right] \times i$$

avec $G_1\beta_1 = G_2\beta_2 = C_3\beta_3 = G_4\beta_4 = \beta$.

Le dispositif de mesure comprend en outre un troisième et un quatrième étages d'amplificateurs différentiels. Le troisième étage comprend un amplificateur différentiel 1.0 qui combine les signaux $U_1$ et $U_3$ issus du deuxième étage pour former le signal :

$$W_1 = U_1 - U_3 = \left[ -4\beta\sin(\varphi/2)\cos(\varphi)\cos(\omega_2 t + 5\varphi/2) \right] \times i$$

Soit, en ajustant le gain de l'amplificateur 10 du troisième étage on obtient le signal :

$$W_2 = \frac{1}{2\cos\varphi}W_1 = \left[ -2\beta\sin(\varphi/2)\cos(\omega_2 t + 5\varphi/2) \right] \times i$$

Le quatrième étage comprend un amplificateur 11 combinant le signal $W_2$ issus du troisième étage et le signal $U_2$ issu du deuxième étage de sorte à délivrer le signal COS suivant :

$$COS = U_2 - W_2 = \left[ -\sqrt{2}G\Delta R\cos(\omega_1 t + 3\pi/4) \right] \times i$$

Concernant le signal SIN, il peut être obtenu selon l'une des trois solutions suivantes :

$$SIN = \frac{1}{2}(U_1 + U_3) = \left[ -\sqrt{2}G\Delta R\sin(\omega_1 t + 3\pi/4) - 2\beta\sin(\varphi/2)\sin\varphi\sin(\omega_2 t + 5\varphi/2) \right] \times i$$

ou
SIN = $U_3$
ou
SIN = $U_1$.

Toutefois, ces trois combinaisons ne permettent pas d'obtenir un signal SIN parfait puisqu'il est perturbé par la fréquence parasite $\omega_2$. Toutefois, l'amplitude A de la déformation ainsi déterminée présente une erreur qui peut être considérée comme acceptable dans certaines applications.

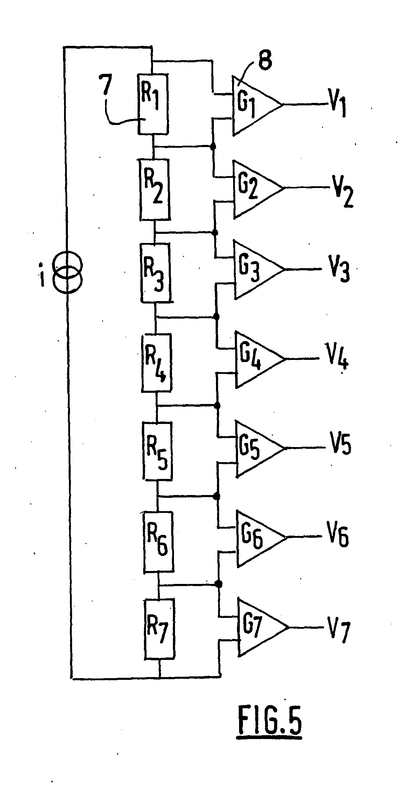

Les troisième et quatrième modes de réalisation décrits ci-dessous en relation avec respectivement les figures 4 et 5 permettent d'obtenir un signal SIN exempt de perturbation.

En relation avec la figure 4, le troisième mode de réalisation comprend cinq jauges de contrainte 7 délivrant chacune un signal fonction de la déformation subie par ladite jauge. Les jauges 7 sont équiréparties sur la zone 6 avec un espacement égal à λ/4. Le montage en boucle de courant comprend les cinq jauges 7 disposées en série et le premier étage comprend cinq amplificateurs différentiels 8 qui délivrent les signaux :

$$V_1 = G_1\big[R_{01} + \Delta R_1 \sin(\omega_1 t) + \beta_1 \sin(\omega_2 t + \varphi)\big]i$$

$$V_2 = G_2\big[R_{02} + \Delta R_2 \sin(\omega_1 t + \pi/2) + \beta_2 \sin(\omega_2 t + 2\varphi)\big]i$$

$$V_3 = G_3\big[R_{03} + \Delta R_3 \sin(\omega_1 t + \pi) + \beta_3 \sin(\omega_2 t + 3\varphi)\big]i$$

$$V_4 = G_4\big[R_{04} + \Delta R_4 \sin(\omega_1 t + 3\pi/2) + \beta_4 \sin(\omega_2 t + 4\varphi)\big]i$$

$$V_5 = G_5\big[R_{05} + \Delta R_5 \sin(\omega_1 t) + \beta_5 \sin(\omega_2 t + 5\varphi)\big]i$$

Dans lesquels, le signal parasite est d'amplitude $\beta_\tau$, de pulsation $\omega_2$ et de phase $\varphi$ par rapport au signal induit par la rotation des billes.

Le dispositif de mesure comprend en outre un deuxième étage comprenant quatre amplificateurs différentiels 9 qui permet de supprimer la composante continue par soustraction des signaux $V_i$ en formant les signaux suivants :

$$U_1 = V_1 - V_2 = \big[-\sqrt{2}G\Delta R\cos(\omega_1 t + \pi/4) - 2\beta\sin(\varphi/2)\cos(\omega_2 t + 3\varphi/2)\big] \times i$$

$$U_2 = V_2 - V_3 = \big[-\sqrt{2}G\Delta R\cos(\omega_1 t + 3\pi/4) - 2\beta\sin(\varphi/2)\cos(\omega_2 t + 5\varphi/2)\big] \times i$$

$$U_3 = V_4 - V_3 = \big[-\sqrt{2}G\Delta R\cos(\omega_1 t + \pi/4) + 2\beta\sin(\varphi/2)\cos(\omega_2 t + 7\varphi/2)\big] \times i$$

$$U_4 = V_5 - V_4 = \big[-\sqrt{2}G\Delta R\cos(\omega_1 t + 3\pi/4) + 2\beta\sin(\varphi/2)\cos(\omega_2 t + 9\varphi/2)\big] \times i$$

Le dispositif de mesure comprend en outre un troisième et un quatrième étages d'amplificateurs différentiels. Le troisième étage comprend deux amplificateurs différentiels 10 qui combinent les signaux $U_1$ à $U_4$ issus du deuxième étage pour former les signaux :

$$W_1 = U_1 - U_3 = \big[-4\beta\sin(\varphi/2)\cos(\varphi)\cos(\omega_2 t + 5\varphi/2)\big] \times i$$

$$W_3 = U_4 - U_2 = \big[4\beta\sin(\varphi/2)\cos(\varphi)\cos(\omega_2 t + 7\varphi/2)\big] \times i$$

Soit, en ajustant les gains des amplificateurs 10 du troisième étage on obtient les signaux :

$$W_2 = \frac{1}{2\cos\varphi}W_1 = \big[-2\beta\sin(\varphi/2)\cos(\omega_2 t + 5\varphi/2)\big] \times i$$

$$W_4 = \frac{1}{2\cos\varphi} W_3 = \left[2\beta\sin(\varphi/2)\cos(\omega_2 t + 7\varphi/2)\right] \times i$$

Le quatrième étage comprend deux amplificateurs 11 combinant respectivement les signaux $W_2$ et $W_4$ issus du troisième étage et les signaux $U_2$ et $U_3$ issus du deuxième étage de sorte à délivrer les signaux COS et SIN suivants :

$$COS = U_2 - W_2 = \left[-\sqrt{2}G\Delta R\cos(\omega_1 t + 3\pi/4)\right] \times i$$

$$SIN = U_3 - W_4 = \left[-\sqrt{2}G\Delta R\sin(\omega_1 t + 3\pi/4)\right] \times i$$

Par conséquent, dans ce troisième mode de réalisation, le dispositif de mesure permet d'obtenir directement des signaux COS et SIN filtrés de même angle et de même amplitude, ladite amplitude étant fonction de A.

Ainsi, en calculant l'expression $SIN^2 + COS^2$ on obtient $[\sqrt{2}G\Delta R]^2 \times I^2$, ce qui permet, en sortie du dispositif de calcul, d'obtenir en fonction du temps l'amplitude A qui est fonction de $\Delta R$.

En relation avec la figure 5, le quatrième mode de réalisation comprend sept jauges de contrainte 7 délivrant chacune un signal fonction de la déformation subie par ladite jauge. Les jauges 7 sont équiréparties sur la zone 6 avec un espacement égal à $\lambda/8$. Le montage en boucle de courant comprend les sept jauges 7 disposées en série et le premier étage comprend sept amplificateurs différentiels 8 qui délivrent les signaux :

$$V_1 = G_1\left[R_{01} + \Delta R_1\sin(\omega_1 t) + \beta_1\sin(\omega_2 t + \varphi)\right]i$$

$$V_2 = G_2\left[R_{02} + \Delta R_2\sin(\omega_1 t + \pi/2) + \beta_2\sin(\omega_2 t + 3\varphi/2)\right]i$$

$$V_3 = G_3\left[R_{03} + \Delta R_3\sin(\omega_1 t + \pi) + \beta_3\sin(\omega_2 t + 2\varphi)\right]i$$

$$V_4 = G_4\left[R_{04} + \Delta R_4\sin(\omega_1 t + 3\pi/2) + \beta_4\sin(\omega_2 t + 5\varphi/2)\right]i$$

$$V_5 = G_5\left[R_{05} + \Delta R_5\sin(\omega_1 t) + \beta_5\sin(\omega_2 t + 3\varphi)\right]i$$

$$V_6 = G_6\left[R_{06} + \Delta R_6\sin(\omega_1 t) + \beta_6\sin(\omega_2 t + 7\varphi/2)\right]i$$

$$V_7 = G_7\left[R_{07} + \Delta R_7\sin(\omega_1 t) + \beta_7\sin(\omega_2 t + 4\varphi)\right]i$$

Dans lesquels, le signal parasite est d'amplitude $\beta_\tau$, de pulsation $\omega_2$ et de phase $\varphi$ par rapport au signal induit par la rotation des billes.

Le dispositif de mesure comprend en outre un deuxième étage comprenant six amplificateurs différentiels (non représenté) qui permet de supprimer la composante continue par soustraction des signaux $V_i$ en formant les signaux suivants :

$$U_1 = V_1 - V_2 = \left[-2G\Delta R\cos(\omega_1 t + \pi/8)\sin(\pi/8) - 2\beta\sin(\varphi/4)\cos(\omega_2 t + 5\varphi/4)\right] \times i$$

$$U_2 = V_2 - V_3 = \left[-2G\Delta R\cos(\omega_1 t + 3\pi/8)\sin(\pi/8) - 2\beta\sin(\varphi/4)\cos(\omega_2 t + 7\varphi/4)\right] \times i$$

$$U_3 = V_3 - V_4 = \left[-2G\Delta R\cos(\omega_1 t + 5\pi/8)\sin(\pi/8) - 2\beta\sin(\varphi/4)\cos(\omega_2 t + 9\varphi/4)\right] \times i$$

$$U_4 = V_4 - V_5 = \left[-2G\Delta R\cos(\omega_1 t + 7\pi/8)\sin(\pi/8) - 2\beta\sin(\varphi/4)\cos(\omega_2 t + 11\varphi/4)\right] \times i$$

$$U_5 = V_5 - V_6 = \left[-2G\Delta R\cos(\omega_1 t + 9\pi/8)\sin(\pi/8) - 2\beta\sin(\varphi/4)\cos(\omega_2 t + 13\varphi/4)\right] \times i$$

$$U_6 = V_6 - V_7 = \left[-2G\Delta R\cos(\omega_1 t + 11\pi/8)\sin(\pi/8) - 2\beta\sin(\varphi/4)\cos(\omega_2 t + 15\varphi/4)\right] \times i$$

Le dispositif de mesure comprend en outre un troisième, un quatrième et un cinquième étages d'amplificateurs différentiels (non représentés).

Le troisième étage comprend trois amplificateurs différentiels qui combinent des signaux $U_i$ issus du deuxième étage pour former les signaux :

$$W_1 = U_2 + U_6 = \left[-4\beta\sin(\varphi/4)\cos(\varphi)\cos(\omega_2 t + 11\varphi/4)\right] \times i$$

$$W_3 = U_1 + U_5 = \left[-4\beta\sin(\varphi/4)\cos(\varphi)\cos(\omega_2 t + 9\varphi/4)\right] \times i$$

$$W_5 = U_1 + U_2 + U_5 + U_6 = \left[-4\beta\sin(\varphi/2)\cos(\varphi)\cos(\omega_2 t + 5\varphi/2)\right] \times i$$

Soit, en ajustant les gains des amplificateurs du troisième étage on obtient les signaux :

$$W_2 = \frac{1}{2\cos\varphi}W_1 = \left[-2\beta\sin(\varphi/4)\cos(\omega_2 t + 11\varphi/4)\right] \times i$$

$$W_4 = \frac{1}{2\cos\varphi}W_3 = \left[-2\beta\sin(\varphi/4)\cos(\omega_2 t + 9\varphi/4)\right] \times i$$

$$W_6 = \frac{1}{2\cos\varphi}W_5 = \left[-2\beta\sin(\varphi/2)\cos(\omega_2 t + 5\varphi/2)\right] \times i$$

Le quatrième étage comprend trois amplificateurs combinant respectivement les signaux $W_i$ issus du troisième étage et des signaux $U_i$ issus du deuxième étage de sorte à délivrer les signaux suivants :

$$X_1 = U_4 - W_2 = \left[-2G\Delta R\sin(\pi/8)\cos(\omega_1 t + 7\pi/8)\right] \times i$$

$$X_2 = U_3 - W_4 = \left[-2G\Delta R\sin(\pi/8)\cos(\omega_1 t + 5\pi/8)\right] \times i$$

$$X_3 = U_3 + U_4 - W_6 = \left[-\sqrt{2}G\Delta R \cos(\omega_1 t + 3\pi/4)\right] \times i$$

Par conséquent, le quatrième étage délivre le signal COS en ajustant le gain de l'amplificateur différentiel correspondant :

$$COS = -1/\sqrt{2}.X_3 = \left[G\Delta R \cos(\omega_1 t + 3\pi/4)\right] \times i$$

Un cinquième étage comprenant un amplificateur est prévu pour délivrer le signal SIN en combinant des signaux issus du quatrième étage et en ajustant le gain dudit amplificateur suivant la formule suivante :

$$SIN = \frac{1}{4\sin^2(\pi/8)}(X_1 - X_2) = \left[G\Delta R \sin(\omega_1 t + 3\pi/4)\right] \times i$$

Par conséquent, dans ce quatrième mode de réalisation, le dispositif de mesure permet d'obtenir directement des signaux COS et SIN filtrées de même angle et de même amplitude, ladite amplitude étant fonction de A.

Ainsi, en calculant l'expression $SIN^2 + COS^2$ on obtient $[G\Delta R]^2 \times i^2$, ce qui permet, en sortie du dispositif de calcul, d'obtenir en fonction du temps l'amplitude A qui est fonction de $\Delta R$.

En relation avec la figure 1, on décrit l'agencement du roulement représenté dans lequel les jauges 7 sont disposées sur un substrat 12 qui est fixé sur la zone de déformation 6 de la bague fixe 1. Le substrat 12 est rigidement fixé à la bague fixe 1, par exemple par collage ou soudage, de sorte qu'il a également pour fonction de transmettre les déformations entre la bague fixe 1 et les jauges 7.

Bien que les jauges 7 décrites ci-dessus soient à base d'éléments résistifs, d'autres jauges 7, par exemple des capteurs choisis parmi les capteurs à ondes acoustiques de surface et les capteurs de champ magnétique, peuvent être utilisées dans le cadre de l'invention à condition qu'elles délivrent un signal fonction d'une déformation. En particulier, les capteurs de champ magnétique peuvent être basés sur des éléments sensibles de type magnétorésistance, magnétorésistance géante, effet Hall, magnétorésistance à effet tunnel, couches magnétostrictives.

Dans le mode de réalisation représenté, les jauges 7 sont sérigraphiées en couche épaisse sur le substrat 12, par exemple en céramique. En particulier, une technologie de type circuit hybride permet d'intégrer le dispositif de mesure et le dispositif de calcul sur le substrat 12. En outre, la sérigraphie permet un bon ajustage de la valeur des résistances ainsi qu'une bonne sensibilité aux déformations, tout en assurant un positionnement précis des résistances sur le substrat 12.

La zone de déformation 6 est usinée de sorte à être sensiblement plane et à s'étendre au-dessus des deux rangées de billes. Dans cette réalisation, les jauges 7 ne sont pas à équidistance du chemin de roulement, de sorte que l'amplitude de la déformation mesurée est fonction de la jauge 7 considérée.

On peut prévoir que les jauges 7 soient fixées directement sur la surface courbe de la bague fixe 1, par exemple les jauges 7 peuvent être de type trames pelliculaires, ce qui permet d'égaliser de construction toutes les distances entre les jauges 7 et le chemin de roulement.

Dans la réalisation représentée sur la figure 1, les jauges 7 de deux systèmes de détermination sont intégrées sur le même substrat 12 de sorte, au voisinage de chaque chemin de roulement, qu'au moins un système de détermination soit prévu pour déterminer l'amplitude des déformations de la zone 6.

En particulier, les jauges 7 sont disposées sur la périphérie extérieure de la bague fixe 1, sensiblement en regard de chacun des chemins de roulement de sorte à augmenter l'intensité des signaux à mesurer. Ainsi, le substrat 12 portant les jauges 7 permet de déterminer l'amplitude des déformations induites respectivement par essentiellement une rangée de billes, et ce dans un même plan axial.

Le roulement peut comprendre au moins trois (huit dans le mode de réalisation représenté sur la figure 1 : quatre visibles et quatre disposés symétriquement à l'arrière du roulement) systèmes de détermination de l'amplitude des déformations de respectivement une zone 6 de la bague fixe 1, lesdits systèmes étant connectés ou destinés à être connectés à un calculateur apte à calculer, en fonction des amplitudes déterminées, les efforts appliqués lors de la rotation sur la bague fixe 1 et/ou sur un élément solidaire de la bague tournante. En particulier, un tel calculateur est décrit dans le document FR-2 839 553 issu de la demanderesse.

**Revendications**

1. Roulement comprenant une bague fixe (1), une bague tournante (2) et au moins une rangée de corps roulants disposés dans un chemin de roulement qui est formé entre lesdites bagues de sorte à permettre leur rotation relative, lesdits corps roulants étant équirépartis dans le chemin de roulement avec un écart angulaire λ, ledit roulement comprenant au moins un système de détermination de l'amplitude A des déformations pseudo sinusoïdales d'une zone (6) de la bague fixe (1) qui sont induites lors de la rotation, ledit roulement étant **caractérisé en ce que** le système de détermination comprend :

   - trois jauges de contrainte (7), délivrant chacune un signal fonction de la déformation subie par ladite jauge, lesdites jauges étant équiréparties sur ladite zone avec un espacement égal à λ/4 ;
   - un dispositif de mesure de trois signaux $V_i$ qui sont fonction respectivement des variations temporelles du signal émis par chaque jauge (7) lors de la rotation, ledit dispositif étant apte à former, par combinaison des trois signaux $V_i$, deux signaux respectivement SIN et COS de même angle et de même amplitude, ladite amplitude étant fonction de A ;
   - un dispositif de calcul de l'amplitude A des déformations de la zone (6) en fonction du temps, ledit dispositif étant agencé pour calculer l'expression $SIN^2 + COS^2$ de sorte à en déduire l'amplitude A.

2. Roulement selon la revendication 1, dans lequel les jauges (7) sont à base d'éléments résistifs de sorte à présenter chacune une résistance électrique $R_i$ qui varie en fonction des déformations subies par ladite jauge.

3. Roulement selon la revendication 2, **caractérisé en ce que** le dispositif de mesure comprend un montage en boucle de courant entre les trois jauges (7), ledit montage comprenant un premier étage de trois amplificateurs différentiels (8) à gain réglable $G_i$.

4. Roulement selon la revendication 3, **caractérisé en ce que** le dispositif de mesure comprend en outre un deuxième étage d'amplificateurs différentiels (9) qui sont montés pour faire les différences $V_1 - V_2 = COS$ et $V_3 - V_2 = SIN$.

5. Roulement selon la revendication 3, **caractérisé en ce qu'**il comprend une quatrième jauge de contrainte (7) délivrant un signal fonction de la déformation subie par ladite jauge, ladite jauge étant espacée d'une distance égale à λ/4 de l'une des trois autres jauges (7), le montage en boucle de courant comprenant ladite quatrième jauge et un quatrième amplificateur différentiel (8) à gain réglable $G_i$ dans le premier étage pour délivrer quatre signaux $V_i$ qui sont fonction respectivement des variations temporelles du signal émis par chaque jauge (7) lors de la rotation, dans lequel le dispositif de mesure comprend en outre un deuxième étage d'amplificateurs différentiels comprenant trois amplificateurs différentiels (9) qui sont montés pour faire les différences $V_1 - V_2$, $V_2 - V_3$ et $V_4 - V_3$, au moins un troisième étage d'amplificateurs différentiels (10, 11) étant prévu pour délivrer les signaux SIN et COS par combinaison des trois signaux issus du deuxième étage.

6. Roulement selon la revendication 5, **caractérisé en ce qu'**il comprend une cinquième jauge de contrainte (7) délivrant un signal fonction de la déformation subie par ladite jauge, ladite jauge étant espacée d'une distance égale à λ/4 de l'une des quatre autres jauges (7), le montage en boucle de courant comprenant ladite cinquième jauge et un cinquième amplificateur différentiel (8) à gain réglable $G_i$ dans le premier étage pour délivrer cinq signaux $V_i$ qui sont fonction respectivement des variations temporelles du signal émis par chaque jauge (7) lors de la rotation, dans lequel le dispositif de mesure comprend en outre un deuxième étage d'amplificateurs différentiels comprenant quatre amplificateurs différentiels (9) qui sont montés pour faire les différences $V_1 - V_2$, $V_2 - V_3$, $V_4 - V_3$ et $V_5 - V_4$, au moins un troisième étage d'amplificateurs différentiels (10, 11) étant prévu pour délivrer les signaux SIN et COS par combinaison des quatre signaux issus du deuxième étage.

7. Roulement selon la revendication 5, **caractérisé en ce qu'**il comprend trois jauges de contrainte supplémentaires (7) délivrant un signal fonction de la déformation subie par ladite jauge, lesdites jauges supplémentaires (7) étant intercalées entre les quatre autres jauges (7) de sorte à former un ensemble de sept jauges (7) équiréparties sur la zone (6) avec un espacement égal à λ/8, le montage en boucle de courant comprenant ledit ensemble de jauges (7) et sept amplificateurs différentiels (8) à gain réglable $G_i$ dans le premier étage pour délivrer sept signaux $V_i$ qui sont fonction respectivement des variations temporelles du signal émis par chaque jauge (7) lors de la rotation, dans lequel le dispositif de mesure comprend en outre un deuxième étage d'amplificateurs différentiels comprenant six amplificateurs différentiels (8) qui sont montés pour faire les différences $V_1 - V_2$, $V_2 - V_3$, $V_3 - V_4$, $V_4 - V_5$, $V_5 - V_6$ et $V_6 - V_7$, au moins un troisième étage d'amplificateurs différentiels étant prévu pour délivrer les signaux SIN et COS par combinaison des six signaux issus du deuxième étage.

8. Roulement selon la revendication 5 ou 6, **caractérisé en ce que** le dispositif de mesure comprend un troisième et un quatrième étages d'amplificateurs différentiels (10, 11), le troisième étage combinant les signaux issus du deuxième étage et le quatrième étage combinant des signaux issus des deuxième et/ou troisième étages de sorte à délivrer des signaux SIN et COS filtrés.

9. Roulement selon la revendication 7, **caractérisé en ce que** le dispositif de mesure comprend un troisième, un quatrième et un cinquième étages d'amplificateurs différentiels, le troisième étage combinant les signaux issus du deuxième étage, le quatrième étage combinant des signaux issus des deuxième et troisième étages et le cinquième étage combinant des signaux issus du quatrième étage de sorte à délivrer des signaux SIN et COS filtrés.

10. Roulement selon l'une quelconque des revendications 5 à 9, **caractérisé en ce qu'**au moins un amplificateur différentiel (9-11) d'au moins un étage présente un gain ajustable.

11. Roulement selon l'une quelconque des revendications 1 à 10, **caractérisé en ce que** les jauges (7) sont disposées sur un substrat (12) qui est fixé sur la zone (6) de déformation de la bague fixe (1).

12. Roulement selon l'une quelconque des revendications 1 à 11, **caractérisé en ce que** les jauges (7) sont disposées sur la zone (6) selon une ligne qui s'étend dans la direction générale de la rotation.

13. Roulement selon l'une quelconque des revendications 1 à 12, **caractérisé en ce que** les jauges (7) sont disposées sur la périphérie extérieure de la bague fixe (1), sensiblement en regard du chemin de roulement.

**Claims**

1. A bearing including a fixed ring (1), a rotating ring (2) and at least a row of rolling bodies positioned in a raceway which is provided between said rings so as to enable the relative rotation thereof, said rolling bodies being equally distributed in the raceway with an angular spacing $\square$, said bearing including at least a system for determining the amplitude A of the pseudo-sinusoidal deformations of a zone (6) of the fixed ring (1) which are induced upon the rotation, said bearing being **characterised in that** the determination system includes:

   - three strain gages (7) each delivering a signal depending on the deformation undergone by said gage, said gages being equally distributed on said zone with a spacing equal to $\square/4$;
   - a device for measuring three signals $V_i$ which respectively depend on the time variations of the signal emitted by each gage (7) upon the rotation, said device being able to form, by combining the three signals $V_i$, two signals respectively SIN and COS having the same angle and the same amplitude, said amplitude being a function of A;
   - a device for calculating the amplitude A of the deformations of zone (6) as a function of time, with said device being so arranged as to calculate the expression $SIN^2+COS^2$ so as to deduce the amplitude A therefrom.

2. A bearing according to claim 1, wherein the gages (7) are based on resistant elements so as to have each an electric resistance $R_i$ which varies as a function of the deformations undergone by said gage.

3. A bearing according to claim 2, **characterised in that** the measuring device includes a current loop mounting between the three gages (7), said mounting including a first stage of three differential amplifiers (8) with adjustable gain $G_i$.

4. A bearing according to claim 3, **characterised in that** the measuring device further includes a second stage of differential amplifiers (9) which are mounted to make the differences $V_1-V_2=COS$ and $V_3-V_2=SIN$.

5. A bearing according to claim 3, **characterised in that** it includes a fourth strain gage (7) delivering a signal as a function of the deformation undergone by said gage, with said gage being spaced by a distance equal to $\square/4$ from one of the other three gages (7), with said current loop mounting including said fourth gage and a fourth differential amplifier (8) with adjustable gain $G_i$ in the first stage to deliver four signals $V_i$ which are respectively a function of the time variations of the signal emitted by each gage (7) upon the rotation, wherein the measuring device further includes a second stage of differential amplifiers including three differential amplifiers (9) which are mounted to make the differences $V_1-V_2$, $V_2-V_3$ and $V_4-V_3$, at least a third stage of differential amplifiers (10, 11) being provided to deliver the signals SIN and COS through the combination of the three signals delivered by the second stage.

6. A bearing according to claim 5, **characterised in that** it includes a fifth strain gage (7) delivering a signal as a function of the deformation undergone by said gage, with said gage being spaced by a distance equal to □/4 from one the other four gages (7), the current loop mounting including said fifth gage and a fifth differential amplifier (8) with adjustable gain $G_i$ in the first stage to deliver five signals $V_i$ which are respectively a function of the time variations of the signals emitted by each gage (7) upon the rotation, wherein the measuring device, further includes a second stage of differential amplifiers including four differential amplifiers (9) which are mounted to make the differences $V_1$-$V_2$, $V_2$-$V_3$, $V_4$-$V_3$, and $V_5$-$V_4$, at least a third stage of differential amplifiers (10, 11) being provided together with the signals SIN and COS through the combination of four signals provided by the second stage.

7. A bearing according to claim 5, **characterised in that** it includes three additional strain gages (7) delivering a signal as a function of the deformation undergone by said gage, with said additional gages (7) being interposed between the other four gages (7) so as to form a set of seven gages (7) equally distributed on the zone (6) with a spacing equal to □8, the current loop mounting including said set of gages (7) and seven differential amplifiers (8) with adjustable gain $G_i$ in the first stage to deliver seven signals $V_i$ which are respectively a function of the time variations of the signal emitted by each gage (7) upon the rotation, wherein the measuring device further includes a second stage of differential amplifiers including six differential amplifiers (8) which are mounted to make the differences $V_1$-$V_2$, $V_2$-$V_3$, $V_3$-$V_4$, $V_4$-$V_5$, $V_5$-$V_6$ and $V_6$-$V_7$, at least a third stage of differential amplifiers being provided to deliver the signals SIN and COS through the combination of six signals delivered by the second stage.

8. A bearing according to claim 5 or 6, **characterised in that** the measuring device includes a third and a fourth stages of differential amplifiers (10, 11), with the third stage combining the signals delivered by the second stage and the fourth stage combining signals delivered by the second and/or third stages so as to deliver filtered SIN and COS signals.

9. A bearing according to claim 7, **characterised in that** the measuring device includes a third, a fourth and a fifth stages of differential amplifiers, with the third stage combining the signals delivered by the second stage, the fourth stage combining signals delivered by the second and third stages and the fifth stage combining the signals issued by the fourth stage so as to deliver filtered SIN and COS signals.

10. A bearing according to any one of claims 5 to 9, **characterised in that** at least one differential amplifier (9-11) of at least one stage has an adjustable gain.

11. A bearing according to any one of claims 1 to 10, **characterised in that** the gages (7) are positioned on a substrate (12) which is fixed on the deformation zone (6) of the fixed ring (1).

12. A bearing according to any one of claims 1 to 11, **characterised in that** the gages (7) are positioned on the zone (6) along a line which extends in the general direction of the rotation.

13. A bearing according to any one of claims 1 to 12, **characterised in that** the gages (7) are positioned on the external periphery of the fixed ring (1), substantially opposite the raceway.

**Patentansprüche**

1. Wälzlager mit einem festen Ring (1), einem drehenden Ring (2) und mindestens einer Reihe Rollkörper, die in einem Rollgang angeordnet sind, der zwischen den besagten Ringen gebildet ist, damit ihre jeweilige Drehung möglich wird, wobei die besagten Rollkörper im Rollgang gleichmäßig mit einem Winkelabstand □ verteilt sind, wobei das besagte Wälzlager mindestens ein System zur Bestimmung der Amplitude A der pseudo-sinusförmigen Verformungen eines Bereichs (6) des festen Rings (1) umfaßt, die bei der Drehung eingeführt werden, wobei das besagte Wälzlager **dadurch gekennzeichnet ist, daß** das Bestimmungssystem folgende Teile umfaßt:

- drei Dehnungsmeßgeräte (7), die jeweils ein Signal in Abhängigkeit von der durch das besagte Dehnungsmeßgerät erlittenen Verformung abgeben, wobei die besagten Dehnungsmeßgeräte im besagten Bereich gleichmäßig mit einem Abstand gleich □/4 verteilt sind;
- eine Meßvorrichtung mit drei Signalen $V_i$, die jeweils von den zeitweisen Variationen des Signals abhängig sind, das von jedem Dehnungsmeßgerät (7) bei der Drehung abgegeben wird, wobei die besagte Vorrichtung geeignet ist, durch Kombination der drei Signale $V_i$ zwei Signale, nämlich SIN und COS mit gleichem Winkel und gleicher Amplitude, zu bilden, wobei die besagte Amplitude von A abhängt;

- eine Rechenvorrichtung für die Amplitude A der Verformungen des Bereichs (6) in Abhängigkeit von der Zeit, wobei die besagte Vorrichtung dafür gestaltet ist, den Ausdruck $SIN^2 + COS^2$ zu berechnen, um daraus die Amplitude A abzuleiten.

2. Wälzlager nach Anspruch 1, **dadurch gekennzeichnet, daß** die Dehnungsmeßgeräte (7) auf Widerstandselementen beruhen, so daß jedes einen elektrischen Widerstand $R_i$ aufweist, der je nach den vom besagten Dehnungsmeßgerät erlittenen Verformungen schwankt.

3. Wälzlager nach Anspruch 2, **dadurch gekennzeichnet, daß** die Meßvorrichtung eine Stromschleifenmontage zwischen den drei Dehnungsmeßgeräten (7) umfaßt, wobei die besagte Montage eine erste Stufe mit drei Differentialverstärkern (8) mit regelbarem Faktor $G_i$ umfaßt.

4. Wälzlager nach Anspruch 3, **dadurch gekennzeichnet, daß** die Meßvorrichtung außerdem eine zweite Stufe mit Differentialverstärkern (9) umfaßt, die montiert sind, um die Differenzen $V_1 - V_2 = COS$ und $V_3 - V_2 = SIN$ zu ziehen.

5. Wälzlager nach Anspruch 3, **dadurch gekennzeichnet, daß** es ein viertes Dehnungsmeßgerät (7) umfaßt, das ein Signal in Abhängigkeit von der Verformung abgibt, die das besagte Dehnungsmeßgerät erleidet, wobei sich das besagte Dehnungsmeßgerät in einem Abstand gleich □/4 von einem der drei anderen Dehnungsmeßgeräte (7) befindet, wobei die Stromschleifenmontage das besagte vierte Dehnungsmeßgerät und einen vierten Differentialverstärker (8) mit regelbarem Faktor $G_i$ in der ersten Stufe umfaßt, der vier Signale $V_1$ abgibt, die jeweils von den zeitweisen Variationen des Signals abhängig sind, das von jedem Dehnungsmeßgerät (7) bei der Drehung abgegeben wird, in dem die Meßvorrichtung außerdem eine zweite Stufe mit Differentialverstärkern umfaßt, die drei Differentialverstärker (9) umfaßt, die montiert sind, um die Differenzen $V_1 - V_2$, $V_2 - V_3$ und $V_4 - V_3$ zu ziehen, mindestens eine dritte Stufe mit Differentialverstärkern (10, 11), die dafür vorgesehen sind, durch Kombination der drei aus der zweiten Stufe kommenden Signale die SIN und COS Signale abzugeben.

6. Wälzlager nach Anspruch 5, **dadurch gekennzeichnet, daß** es ein fünftes Dehnungsmeßgerät (7) umfaßt, das ein Signal in Abhängigkeit von der Verformung abgibt, die das besagte Dehnungsmeßgerät erleidet, wobei sich das besagte Dehnungsmeßgerät in einem Abstand gleich □/4 von einem der vier anderen Dehnungsmeßgeräte (7) befindet, wobei die Stromschleifenmontage das besagte fünfte Dehnungsmeßgerät und einen fünften Differentialverstärker (8) mit regelbarem Faktor $G_i$ in der ersten Stufe umfaßt, der fünf Signale $V_1$ abgibt, die jeweils von den zeitweisen Variationen des Signals abhängig sind, das von jedem Dehnungsmeßgerät (7) bei der Drehung abgegeben wird, in dem die Meßvorrichtung außerdem eine zweite Stufe mit Differentialverstärkern umfaßt, die vier Differentialverstärker (9) umfaßt, die montiert sind, um die Differenzen $V_1 - V_2$, $V_2 - V_3$, $V_4 - V_3$ und $V_5 - V_4$ zu ziehen, mindestens eine dritte Stufe mit Differentialverstärkern (10, 11), die dafür vorgesehen sind, durch Kombination der vier aus der zweiten Stufe kommenden Signale die SIN und COS Signale abzugeben.

7. Wälzlager nach Anspruch 5, **dadurch gekennzeichnet, daß** es drei weitere Dehnungsmeßgeräte (7) umfaßt, die ein Signal in Abhängigkeit von der Verformung abgibt, die das besagte Dehnungsmeßgerät erleidet, wobei die besagten zusätzlichen Dehnungsmeßgeräte (7) zwischen die vier anderen Dehnungsmeßgeräte (7) eingeschoben sind, so daß sie eine Gruppe mit sieben Dehnungsmeßgeräten (7) bilden, die gleichmäßig mit einem Abstand von gleich □/8 im Bereich (6) verteilt sind, wobei die Stromschleifenmontage die besagte Gruppe mit Dehnungsmeßgeräten (7) und sieben Differentialverstärker (8) mit regelbarem Faktor $G_i$ in der ersten Stufe umfaßt, die sieben Signale $V_1$ abgeben, die jeweils von den zeitweisen Variationen des Signals abhängig sind, das von jedem Dehnungsmeßgerät (7) bei der Drehung abgegeben wird, in dem die Meßvorrichtung außerdem eine zweite Stufe mit Differentialverstärkern umfaßt, die sechs Differentialverstärker (8) umfaßt, die montiert sind, um die Differenzen $V_1 - V_2$, $V_2 - V_3$, $V_3 - V_4$, $V_4 - V_5$, $V_5 - V_6$ und $V_6 - V_7$ zu ziehen, mindestens eine dritte Stufe mit Differentialverstärkern (10, 11), die dafür vorgesehen sind, durch Kombination der sechs aus der zweiten Stufe kommenden Signale die SIN und COS Signale abzugeben.

8. Wälzlager nach Anspruch 5 oder 6, **dadurch gekennzeichnet, daß** die Meßvorrichtung eine dritte und eine vierte Stufe mit Differentialverstärkern (10, 11) umfaßt, wobei die dritte Stufe die aus der zweiten Stufe kommenden Signale kombiniert und die vierte Stufe aus der zweiten und/oder dritten Stufe kommende Signale kombiniert, so daß gefilterte SIN und COS Signale abgegeben werden.

9. Wälzlager nach Anspruch 7, **dadurch gekennzeichnet, daß** die Meßvorrichtung eine dritte, eine vierte und eine fünfte Stufe mit Differentialverstärkern umfaßt, wobei die dritte Stufe die aus der zweiten Stufe kommenden Signale kombiniert, die vierte Stufe aus der zweiten und dritten Stufe kommende Signale kombiniert und die fünfte Stufe aus der vierten Stufe kommende Signale kombiniert, so daß gefilterte SIN und COS Signale abgegeben werden.

10. Wälzlager nach einem beliebigen der vorstehenden Ansprüche 5 bis 9, **dadurch gekennzeichnet, daß** mindestens ein Differentialverstärker (9 - 11) mindestens einer Stufe einen einstellbaren Faktor aufweist.

11. Wälzlager nach einem beliebigen der vorstehenden Ansprüche 1 bis 10, **dadurch gekennzeichnet, daß** die Dehnungsmeßgeräte (7) auf einem Substrat (12) angeordnet sind, das auf dem Verformungsbereich (6) des festen Rings (1) befestigt ist.

12. Wälzlager nach einem beliebigen der vorstehenden Ansprüche 1 bis 11, **dadurch gekennzeichnet, daß** die Dehnungsmeßgeräte (7) auf dem Bereich (6) in einer Linie angeordnet sind, die sich in der allgemeinen Drehrichtung erstreckt.

13. Wälzlager nach einem beliebigen der vorstehenden Ansprüche 1 bis 12, **dadurch gekennzeichnet, daß** die Dehnungsmeßgeräte (7) auf der äußeren Peripherie des festen Rings (1) deutlich gegenüber dem Rollgang angeordnet sind.

FIG.1

FIG.2

FIG.3

FIG.4

FIG.5

**EP 1 946 059 B1**

**RÉFÉRENCES CITÉES DANS LA DESCRIPTION**

**Documents brevets cités dans la description**

- FR 2839553
- FR 2812356

- EP 1221589 A2